# EUROPEAN PATENT SPECIFICATION

(11) **EP 3 733 887 B1**
(45) Date of publication and mention of the grant of the patent: **23.08.2023**
(21) Application number: 18894613.1
(22) Date of filing: 07.12.2018
(51) Int. Cl.: C22C 21/02, C22C 21/08, C22F 1/043, C22F 1/047, C22F 1/05

(54) **ALUMINIUM ALLOY MATERIAL, AND CABLE, ELECTRIC WIRE, AND SPRING MEMBER USING SAME**
ALUMINIUMLEGIERUNGSMATERIAL UND KABEL, ELEKTRISCHER DRAHT UND FEDERELEMENT DAMIT
MATÉRIAU D'ALLIAGE D'ALUMINIUM, ET CÂBLE, FIL ÉLECTRIQUE ET ÉLÉMENT DE RESSORT UTILISANT CELUI-CI

(30) Priority: 27.12.2017 JP 2017252087
(43) Date of publication of application: 04.11.2020
(73) Proprietor: FURUKAWA ELECTRIC CO., LTD., Chiyoda-ku Tokyo 100-8322 (JP)
(72) Inventor: ARAKI, Akiyoshi, Tokyo 100-8322 (JP); KANEKO, Hiroshi, Tokyo 100-8322 (JP); OGIWARA, Yoshiaki, Tokyo 100-8322 (JP)
(74) Representative: Winter, Brandl - Partnerschaft mbB
(86) International application number: PCT/JP2018/045038
(87) International publication number: WO 2019/131053

(56) References cited:
- EP-A1- 3 486 341
- EP-A1- 3 486 342
- WO-A1-2013/146762
- WO-A1-2013/146762
- JP-A- 2004 134 212
- JP-A- 2010 280 969
- JP-A- 2010 280 969
- JP-B2- 6 356 365
- JP-B2- 6 410 967

## Description

### TECHNICAL FIELD

The present invention relates to an aluminum alloy material and a cable, an electric wire and a spring member, each comprising the same.

### BACKGROUND ART

Conventionally, copper-based metal materials have been widely used for cables for transmitting electric power or signals, such as cab tire cables including robot cables, and elevator cables. In recent years, however, substitution of aluminum-based materials, which have a smaller specific gravity, a larger thermal expansion coefficient, relatively good heat and electrical conductivities, and excellent corrosion resistance compared to copper-based metal materials, has been considered.

However, a pure aluminum material has a problem that bending fatigue fracture (hereinafter referred to as bending fatigue resistance) occurs earlier than copper-based metal materials. In addition, aluminum alloy materials, such as 2000 series (Al-Cu based material) and 7000 series (Al-Zn-Mg based material), use precipitation strengthening and thus have relatively high bending fatigue resistance, but have problems such as poor corrosion resistance, stress corrosion cracking resistance, and low conductivity. 6000-series aluminum alloy materials, which have relatively good electrical or heat conductivity and corrosion resistance, have a relatively high bending fatigue resistance among aluminum-based alloy materials. The bending fatigue resistance is, however, still insufficient, and higher bending fatigue resistance is required.

On the other hand, as a method for improving bending fatigue resistance of aluminum alloys for conduction use, a method for forming fine crystal grains by a large deformation method, such as an ECAP method, has been proposed (for example, Patent Document 1). However, in the ECAP method, the length of an aluminum alloy wire rod produced is short, so that the ECAP method was difficult for practical use in industry. Further, the aluminum alloy wire rod produced by the ECAP method described in Patent Document 1 has a number of repetitions until breakage (number of repetitions to fracture) which is 10 times or less with respect to that of a pure aluminum wire rod, and cannot be said to have a satisfactory bending fatigue resistance capable of withstanding long-term use. Further, the aluminum alloy wire rod produced by the large deformation method is poor in elongation, and thus has a problem that disconnection occurs frequently when wire drawing or wire twisting is performed.

Patent Document 2 discloses a copper-coated aluminum alloy wire with enhanced strength, which is produced by coating a core material of an Al-Fe-Mg-Si-based aluminum alloy with copper, followed by cold working. However, the copper-coated aluminum alloy wire disclosed in Patent Document 2 has a problem that cracks are easily generated on the surface of the copper coating layer during repeated bending. This is because the copper-based material, which has a low elastic limit and which is easily plastically deformed, exists in the surface layer of the wire rod, in which bending strain is large. Another problem is that compounds are formed in the core material of the aluminum alloy and the copper coating layer and serve as crack generating points, which results in poor bending fatigue resistance.
Patent Document 1: PCT International Publication No. WO2013/146762
Patent Document 2: Japanese Unexamined Patent Application, Publication No. 2010-280969

### DISCLOSURE OF THE INVENTION

### Problems to be Solved by the Invention

It is an object of the present invention to provide an aluminum alloy material having a high bending fatigue resistance and a predetermined elongation, as well as a cable, an electric wire, and a spring member comprising the same.

### Means for Solving the Problems

The configuration of the gist of the present invention is as described below. A first aspect of the present invention is an aluminum alloy material having an alloy composition comprising, by mass%, Mg in an amount of 0.20 to 1.80%, Si in an amount of 0.20 to 2.00% and Fe in an amount of 0.01 to 1.50%, further one or more elements selected from the group of Cu, Ag, Zn, Ni, Ti, Co, Au, Mn, Cr, V, Zr and Sn in an amount of 0.00 to 2.00% in total, with the balance being Al and inevitable impurities, in which the aluminum alloy material has a fibrous metal structure in which crystal grains extend along one direction, in which, in a cross section of the aluminum alloy material perpendicular to a longitudinal direction along which crystal grains extend, an average crystal grain size R1 of crystal grains existing in a thickness position D is 400 nm or less, with the thickness position D being a position in a region extending from the surface of the aluminum alloy material to 1/20 of the thickness of the aluminum alloy material, and in which a ratio (R2/R1) of an average crystal grain size R2 of crystal grains existing in a thickness central position C of the aluminum alloy material with respect to the average crystal grain size R1 in the thickness position D is equal to or greater than 1.8. A second aspect of the present invention is the aluminum alloy material as described in the first aspect, in which, in a cross section of the aluminum alloy material parallel to the longitudinal direction along which crystal grains extend, crystal grains existing in the thickness position D have a ratio (L1/L2) of a longitudinal direction dimension L1 measured in the longitudinal direction with respect to a short direction dimension L2 measured in a perpendicular direction relative to the longitudinal direction, equal to or greater than 10. A third aspect of the present invention is the aluminum alloy material as described in the first or second aspect, in which the aluminum alloy material is a wire rod. A fourth aspect of the present invention is the aluminum alloy material as described in the third aspect, in which a diameter of the wire rod is 0.01 to 1.50 mm. A fifth aspect of the present invention is the aluminum alloy material as described in the first or second aspect, in which the aluminum alloy material is a plate. A sixth aspect of the present invention is the aluminum alloy material as described in the fifth aspect, in which a thickness of the plate is 0.02 to 2.00 mm. A seventh aspect of the present invention is a cable, comprising the aluminum alloy material as described in any one of the third to sixth aspects. An eighth aspect of the present invention is an electric wire comprising the aluminum alloy material as described in any one of the third to sixth aspects. A ninth aspect of the present invention is a spring member comprising the aluminum alloy material as described in any one of the third to sixth aspects.

### Effects of the Invention

According to the present invention, it is possible to provide an aluminum alloy material having a high bending fatigue resistance and a predetermined elongation, and a cable, an electric wire, and a spring member each comprising the aluminum alloy material.

### BRIEF DESCRIPTION OF THE DRAWINGS

Fig. 1 is a schematic cross-sectional view perpendicular to the longitudinal direction of an aluminum alloy material of an embodiment: the aluminum alloy material is a wire rod in (a) and a plate in (b);
Fig.2 is a schematic drawing of a state of crystal grains in an aluminum alloy material of an embodiment: crystal grains exist in the thickness position D in (a), and in the thickness central position C in (b);
Fig. 3 is a schematic drawing of a device for measuring bending fatigue resistance;
Fig. 4 is a SIM image of a cross section parallel to a longitudinal direction of the aluminum alloy wire rod of Example 1;
Fig. 5 is a SIM image of a thickness position of a cross section perpendicular to the longitudinal direction of the aluminum alloy wire rod of Example 1, with the thickness position being a position in a region extending from a surface of the aluminum alloy wire rod to 1/20 of the wire diameter; and
Fig. 6 is a SIM image of the central part of a cross section perpendicular to the longitudinal direction of the aluminum alloy wire rod of Example 1.

### PREFERRED MODE FOR CARRYING OUT THE INVENTION

Below, the present invention is described based on preferred embodiments thereof.

As a result of intensive studies, the present inventors have found that an aluminum alloy material having a predetermined alloy composition, a metal structure in a state in which crystal grains extend along one direction, and an average crystal grain size in a predetermined state allows obtainment of an aluminum alloy material having bending fatigue resistance which greatly exceeds that of a conventional aluminum alloy material and which is excellent in elongation while having a bending fatigue resistance comparable to that of a copper-based metal material. Based on this finding, the present inventors have completed the present invention.

The aluminum alloy material of an embodiment has an alloy composition containing, by mass%, magnesium (Mg): 0.20 to 1.80%, silicon (Si): 0.20 to 2.00% and iron (Fe): 0.01 to 1.50%, and further containing one or more elements selected from the group of copper (Cu), silver (Ag), zinc (Zn), nickel (Ni), cobalt (Co), titanium (Ti), gold (Au), manganese (Mn), chromium (Cr), vanadium (V), zirconium (Zr) and tin (Sn): 0.00 to 2.00% in total, with the balance being Al and inevitable impurities, and the aluminum alloy material has a fibrous metal structure in which crystal grains extend along one direction. In the aluminum alloy material, in a cross section perpendicular to the longitudinal direction along which the crystal grains extend, an average crystal grain size R1 of crystal grains existing in a thickness position D, which is a position in a region extending from the surface of the aluminum alloy material to 1/20 of the thickness of the aluminum alloy material, is 400 nm or less. Additionally, a ratio (R2/R1) of an average crystal grain size R2 of crystal grains existing in a thickness central position C of the aluminum alloy material with respect to the average crystal grain size R1 in the thickness position D is equal to or greater than 1.8.

Here, among the element components of the above-mentioned alloy composition, an element component whose lower limit value of the content range is described as "0.00%" means that the element component is optionally added to the aluminum alloy material as required. That is, when the lower limit value of an element component is "0.00%", it means that the element component is not contained in the aluminum alloy material or contained in an amount less than the detection limit value.

In this specification, the term "crystal grain" refers to a portion surrounded by misorientation boundaries. Here, the "misorientation boundary" refers to a boundary at which contrast (channeling contrast) changes discontinuously, in observation of a metal structure by scanning transmission electron microscopy (STEM), scanning ion microscopy (SIM), or the like. A dimension perpendicular to the longitudinal direction along which crystal grains extend corresponds to an interval of misorientation boundaries.

### (1) State of crystal grains of the aluminum alloy material

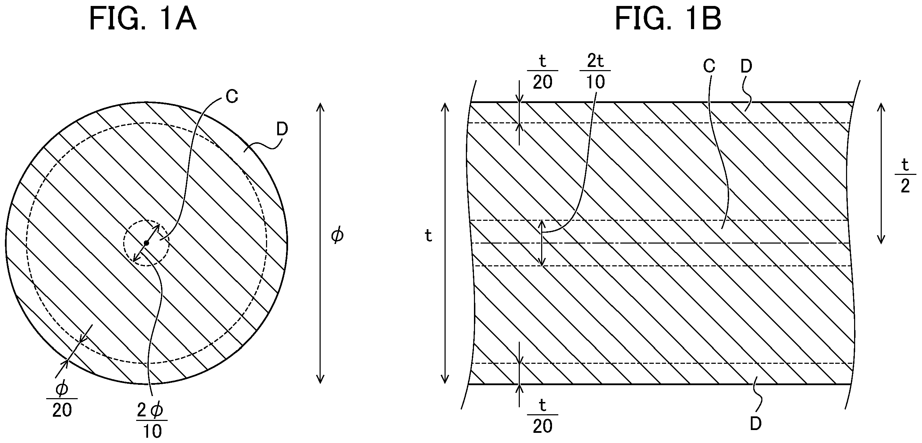

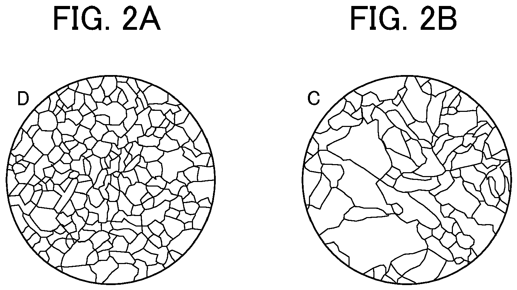

The state of crystal grains of an aluminum alloy material of an embodiment and a function thereof are described below with reference to Figs. 1 and 2.

The aluminum alloy material has a fibrous metal structure in which crystal grains are aligned and extend in one direction. Further, the aluminum alloy material is in a state, in which the crystal grains thereof are fibrous, an average crystal grain size R1 of crystal grains existing in the thickness position D is 400 nm or less in a cross section perpendicular to the longitudinal direction along which the crystal grains extend, and crystal grains having a relatively large crystal grain size R2 are retained in the thickness central position C. Such fine crystal grains are in the form of fibers aligned and extending in one direction, and when viewed in a cross section of the aluminum alloy material perpendicular to the longitudinal direction along which the crystal grains extend, crystal grains existing in the side closer to the surface (in the thickness position D) and crystal grains existing in the thickness central position C have different crystal grain sizes, so that the metal structure has a gradient in the crystal grain size. This metal structure is a new metal structure and such a structure cannot be found in conventional aluminum alloy materials.

Here, the thickness position D is a position in a region which is in a cross section of the aluminum alloy material perpendicular to the longitudinal direction along which crystal grains extend and which extends from the surface of the aluminum alloy material to 1/20 of the thickness of the aluminum alloy material. Further, when the aluminum alloy material is a wire rod as shown in, for example, Fig. 1(a), the thickness corresponds to a wire diameter ϕ of the wire rod, and when the aluminum alloy material is a plate as shown in Fig. 1(b), the thickness corresponds to a thickness t of the plate. For example, when the aluminum alloy material is a wire rod as shown in Fig. 1(a), the thickness position D is a position in a region concentrically annularly defined with respect to the center of the aluminum alloy material in the cross section. The thickness central position C is a position in a region in the cross section, with the position including the center of the thickness of the aluminum alloy material and being surrounded by a circle having a diameter of 2/10 (diameter of 2ϕ/10) of the thickness. When the aluminum alloy material is a plate as shown in Fig. 1(b), the thickness position D is a position in a region partitioned into a rectangular shape parallel to the top surface and the bottom surface of the aluminum alloy material in the cross section, and the thickness central position C is in a region which includes a center line defining the middle between the top surface and the bottom surface of the aluminum alloy material in the cross-section, and which is partitioned into a rectangular shape having a short side which is 2/10 of the thickness (the short side is 2t/10). In addition, each of average crystal grain sizes R1 and R2 refers to a diameter of equivalent circles obtained by calculating areas of crystal grains from regions each surrounded by outline of each of the crystal grains in a cross section perpendicular to the longitudinal direction along which the crystal grains extend.

As described above, the aluminum alloy material has a crystal grain size gradient in which the closer to the thickness central position C, the larger the crystal grain size, and the crystal grain size decreases from the thickness central position C toward the surface of the aluminum alloy material. Such an aluminum alloy material has a fibrous metal structure in which crystal grains extend along one direction, and is controlled so that an average crystal grain size R1 in the thickness position D is 400 nm or less in the cross section perpendicular to the one direction and a ratio (R2/R1) of an average crystal grain size R2 of the crystal grains existing in the thickness central position C with respect to the average crystal grain size R1 in the thickness position D is 1.8 or more. Such a configuration enables the aluminum alloy material to concurrently achieve a high bending fatigue resistance comparable to that of copper-based metal materials and a predetermined elongation (e.g., the number of repetitions until breakage is 100,000 or more when an aluminum alloy material is repeatedly bent at a bending strain amplitude of ±0.25% and an elongation by a tensile test is 3% or more). In particular, the aluminum alloy material exhibits excellent fatigue resistance properties against repeated bending deformation.

In addition, reducing the crystal grain size in a surface layer including the surface and the thickness position D of an aluminum alloy material is effective, for example, in improving grain boundary erosion, reducing surface roughness of the aluminum alloy material after plastic working, and reducing shear drop or burr during shearing processing in addition to improving fatigue properties, and has an effect of wholly improving the characteristics of the aluminum alloy material.

The metal structure of the aluminum alloy material is fibrous, and elongated crystal grains are aligned and extend in one direction in a fibrous shape. Here, the "one direction" corresponds to a working direction of an aluminum alloy material. For example, in a case where the aluminum alloy material is a wire rod, the one direction corresponds to a drawing direction, and in a case where the aluminum alloy material is a plate or a foil, the one direction corresponds to a rolling direction.

The one direction preferably corresponds to the longitudinal direction of the aluminum alloy material. That is, unless an aluminum material is longitudinally cut so that a longitudinal dimension is shorter than a dimension in a direction perpendicular to the longitudinal direction, the working direction typically corresponds to the longitudinal direction. For example, when the aluminum alloy material is a wire rod, the one direction corresponds to the longitudinal direction of the wire rod.

Further, in the cross section of the aluminum alloy material perpendicular to the longitudinal direction along which the crystal grains extend, an average crystal grain size R1 in the thickness position D is preferably 400 nm or less, more preferably 230 nm or less, still more preferably 210 nm or less, still more preferably 180 nm or less, and most preferably 150 nm or less. In such a fibrous metal structure of an aluminum alloy material, a grain size of crystal grains extending in one direction is small (that is, a dimension in a direction perpendicular to the longitudinal direction along which the crystal grains extend is small), and this can effectively suppress crystal slip due to repeated deformation, which results in higher bending fatigue resistance than conventional methods. As for the lower limit of the average crystal grain size R1 in the thickness position D, the smaller, the more preferable in order to achieve higher bending fatigue resistance. The lower limit is 20 nm, for example, as a limit in terms of manufacturing or physics.

Further, in the cross section of an aluminum alloy material perpendicular to the longitudinal direction along which crystal grains extend, a ratio (R2/R1) of an average crystal grain size R2 in the thickness central position C with respect to the average crystal grain size R1 in the thickness position D is 1.8 or more, preferably 2.0 or more, more preferably 2.2 or more, still more preferably 2.4 or more, and most preferably 2.5 or more. As described above, a larger crystal grain size in the thickness central position C than in the vicinity of the circumference of the cross section allows dislocation to increase during tensile deformation, and this enables the aluminum alloy material to have a predetermined elongation while having high bending fatigue resistance. As for the upper limit of the above-mentioned ratio (R2/R1), the larger, the more preferable, in order to achieve both higher bending fatigue resistance and elongation. The upper limit is, for example, 20.0 as a limit in terms of manufacturing.

Further, in a cross section of an aluminum alloy material parallel to a longitudinal direction along which crystal grains extend, a longitudinal direction dimension measured along the longitudinal direction of the crystal grains present in the aluminum alloy material is not particularly limited, but is preferably 1200 nm or more, more preferably 1700 nm or more, and still more preferably 2200 nm or more.

Furthermore, as for crystal grains existing in the thickness position D in the cross section of the aluminum alloy material parallel to the longitudinal direction along which the crystal grains extend, an aspect ratio (L1/L2) of a longitudinal direction dimension L1 measured along the longitudinal direction to a short direction dimension L2 measured along the direction perpendicular to the longitudinal direction is preferably 10 or more, and more preferably 20 or more. The aspect ratio (L1/L2) within the above-mentioned range improves the bending fatigue resistance.

As a mechanism for improving the bending fatigue resistance achieved by the state of crystal grains, the following can be exemplified: a mechanism in which crystal grains are in a fibrous state with a large aspect ratio on a surface, in which bending strain becomes maximum, of an aluminum alloy material, resulting in fewer grain boundaries, which serve as starting points of cracks, on the surface and thereby cracks are less likely to be generated; a mechanism in which all or most of bending strain can be absorbed as elastic strain because a small short direction dimension L2 of the crystal grains makes it difficult for a dislocation to move; and a mechanism in which a difference in level serving as a crack generating point is less likely to be generated on a surface of an aluminum alloy material and the grain boundaries interfere with crack extension when a crack is generated. These mechanisms are considered to act synergistically.

In addition, examples of the mechanism in which the state of crystal grains can improve tensile elongation includes the following: a mechanism in which a large average crystal grain size in the thickness central position C and a small accumulated lattice strain result in large plastic deformability, which can sufficiently absorb the plastic deformation during the tensile deformation; and a mechanism in which a small average crystal grain size in the thickness position D enables tensile stain to be absorbed as elastic deformation, or the like.

### (2) Alloy Composition of Aluminum Alloy Material

Subsequently, alloy compositions of an aluminum alloy material of an embodiment and functions thereof are described below.

### (Essential Additive Components)

The aluminum alloy material contains 0.20 to 1.80% of Mg, 0.20 to 2.00% of Si, and 0.01 to 1.50% of Fe, in % by mass. In the following, % by mass is simply recited as %.

### <Mg: 0.20 to 1.80%>

Mg has a function of strengthening by existing in an aluminum base material as a solid solution, a function of rendering crystals finer, and a function of improving tensile strength and bending fatigue resistance by a synergistic effect with Si. In addition, when Mg-Si clusters are formed as solute atom clusters, Mg is an element having an effect of improving tensile strength and elongation. However, an Mg content of less than 0.20% yields this effect to an insufficient degree. An Mg content exceeding 1.80% forms a crystallized product, resulting in lower workability (wire drawing workability, bending workability, etc.). Therefore, the Mg content is 0.20 to 1.80%, and preferably 0.40 to 1.00%.

### <Si: 0.20-2.00%>

Si has a function of strengthening by existing in an aluminum base material as a solid solution, a function of rendering crystals finer, and a function of improving tensile strength and bending fatigue resistance by a synergistic effect with Mg. In addition, Si is an element having an effect of improving tensile strength and elongation, when Mg-Si clusters or Si-Si clusters are formed as solute atom clusters. However, an Si content of less than 0.20% yields this effect to an insufficient degree. An Si content exceeding 2.00% forms a crystallized product, resulting in lower workability. Therefore, the Si content is 0.20 to 2.00%, and preferably 0.40 to 1.00%.

### <Fe: 0.01 to 1.50%>

Fe is crystallized or precipitated as an intermetallic compound such as an Al-Fe based, Al-Fe-Si based, or Al-Fe-Si-Mg based intermetallic compound, together with aluminum or an essential additive element, during casting or homogenization heat treatment. As described above, intermetallic compounds mainly composed of Fe and Al are referred to as an Fe-based compound in this specification. The Fe-based compound contributes to reduction in diameter of crystal grains and improves the tensile strength. Fe also has a function of improving the tensile strength by existing in aluminum as a solid solution. An Fe content of less than 0.01% provides these effects to an insufficient degree. In contrast, an Fe content exceeding 1.50% lowers processability due to an excessive amount of the Fe-based compound. A slow cooling rate during casting renders the dispersion of the Fe-based compound sparse, which results in adverse effects. Therefore, the Fe content is 0.01 to 1.50%, preferably 0.02 to 0.80%, more preferably 0.03 to 0.50%, still more preferably 0.04 to 0.30%, and most preferably 0.05 to 0.25%.

As the mechanism in which the above-mentioned components render crystals finer, the following mechanisms can be exemplified: a mechanism in which a large difference in the atomic radii between each of the components and aluminum lowers the energy of crystal grain boundaries; a mechanism in which when the respective components enter crystal grain boundaries, a large diffusion coefficient of the respective components lowers mobility of the crystal grain boundaries, and this improves an effect of rendering crystals finer and suppresses the crystal structure from being coarsened during repeated deformation; and a mechanism in which a large interaction with hollow cavities traps the hollow cavities, and this delays the diffusion phenomenon. These mechanisms are considered to act synergistically.

### (Optional Additives)

The aluminum alloy material contains one or more elements selected from the group of Cu, Ag, Zn, Ni, Ti, Co, Au, Mn, Cr, V, Zr and Sn in an amount of 2.00% or less, as optional additives in addition to Mg, Si and Fe which are essential additive components.

### <One or More Elements selected from the Group of Cu, Ag, Zn, Ni, Ti, Co, Au, Mn, Cr, V, Zr and Sn: 0.00 to 2.00% in Total>

All of Cu, Ag, Zn, Ni, Ti, Co, Au, Mn, Cr, V, Zr and Sn are elements that particularly improve heat resistance. From the viewpoint of ensuring achievement of such an effect, it is preferable that the content of these optional additives is set to 0.06% or more. However, a total content of these optional additives exceeding 2.00% results in lower processability. Therefore, the total content of one or more elements selected from the group of Cu, Ag, Zn, Ni, Ti, Co, Au, Mn, Cr, V, Zr and Sn is 0.00 to 2.00%, preferably 0.06% to 2.00%, and more preferably 0.30 to 1.20%. The total content of these elements may be 0.00%. These elements may be added alone as a single element or in combination of two or more types.

In consideration of corrosion resistance when used in a corrosive environment, the aluminum alloy material preferably contains one or more elements selected from the group of Zn, Ni, Ti, Co, Mn, Cr, V, Zr and Sn. Further, a total content of these elements of less than 0.06% results in insufficient corrosion resistance. In contrast, a total content of these elements exceeding 2.00% results in lower processability. Therefore, from the viewpoint of corrosion resistance, the total content of one or more elements selected from the group of Zn, Ni, Ti, Co, Mn, Cr, V, Zr and Sn is preferably 0.06 to 2.00%, and more preferably 0.30 to 1.20%.

### <Cu: 0.00 to 2.00%>

Cu is an element that particularly improves heat resistance. From the viewpoint of ensuring achievement of such an effect, it is preferable that the content of Cu is set to 0.06% or more. However, a content of Cu exceeding 2.00% results in lower processability and lower corrosion resistance. Therefore, the content of Cu is preferably 0.00 to 2.00%, more preferably 0.06% to 2.00%, and most preferably 0.30 to 1.20%. Incidentally, the content of Cu may be set to 0.00%.

### <Ag: 0.00 to 2.00%>

Ag is an element that particularly improves heat resistance. From the viewpoint of ensuring achievement of such an effect, the content of Ag is preferably set to 0.06% or more. However, a content of Ag exceeding 2.00% results in lower processability Thus, the Ag content is preferably from 0.00 to 2.00%, more preferably from 0.06% to 2.00%, and most preferably from 0.30 to 1.20%. Incidentally, the content of Ag may be set to 0.00%.

### <Zn: 0.00 to 2.00%>

Zn is an element that particularly improves heat resistance. From the viewpoint of ensuring achievement of such an effect, it is preferable that the content of Zn is set to 0.06% or more. However, a content of Zn exceeding 2.00% results in lower processability. Therefore, the content of Zn is preferably 0.00 to 2.00%, more preferably 0.06% to 2.00%, and most preferably 0.30 to 1.20%. Incidentally, the content of Zn may be set to 0.00%. In consideration of corrosion resistance when used in a corrosive environment, the aluminum alloy material preferably contains Zn. Further, a content of Zn of less than 0.06% results in insufficient corrosion resistance. In contrast, a content of Zn exceeding 2.00% results in lower processability. Therefore, from the viewpoint of corrosion resistance, the content of Zn is preferably 0.06 to 2.00%, and more preferably 0.30 to 1.20%.

### <Ni: 0.00 to 2.00%>

Ni is an element that particularly improves heat resistance. From the viewpoint of ensuring achievement of such an effect, it is preferable that the content of Ni is set to 0.06% or more. However, a content of Ni exceeding 2.00% results in lower processability. Therefore, the content of Ni is preferably 0.00 to 2.00%, more preferably 0.06% to 2.00%, and most preferably 0.30 to 1.20%. Incidentally, the content of Ni may be set to 0.00%. In consideration of corrosion resistance when used in a corrosive environment, the aluminum alloy material preferably contains Ni. Further, a content of Ni of less than 0.06% results in insufficient corrosion resistance. In contrast, a content of Ni exceeding 2.00% results in lower processability. Therefore, from the viewpoint of corrosion resistance, the content of Ni is preferably 0.06 to 2.00%, and more preferably 0.30 to 1.20%.

### <Ti: 0.00 to 2.00%>

Ti is an element that renders crystals finer during casting and improves heat resistance. From the viewpoint of ensuring achievement of such effects, it is preferable that the content of Ti is set to 0.005% or more. However, a content of Ti exceeding 2.00% results in lower processability. Therefore, the content of Ti is preferably 0.00 to 2.00%, more preferably 0.06% to 2.00%, and most preferably 0.30 to 1.20%. Incidentally, the content of Ti may be 0.00%. In consideration of corrosion resistance when used in a corrosive environment, the aluminum alloy material preferably contains Ti. Further, a content of Ti of less than 0.06% results in insufficient corrosion resistance. In contrast, a content of Ti exceeding 2.00% results in lower processability. Therefore, from the viewpoint of corrosion resistance, the content of Ti is preferably 0.06 to 2.00%, and more preferably 0.30 to 1.20%.

### <Co: 0.00 to 2.00%>

Co is an element that particularly improves heat resistance. From the viewpoint of ensuring achievement of such an effect, it is preferable that the content of Co is set to 0.06% or more. However, a content of Co exceeding 2.00% results in lower processability. Therefore, the content of Co is preferably 0.00 to 2.00%, more preferably 0.06% to 2.00%, and most preferably 0.30 to 1.20%. Incidentally, the content of Co may be 0.00%. In consideration of corrosion resistance when used in a corrosive environment, the aluminum alloy material preferably contains Co. Further, a content of Co less than 0.06% results in insufficient corrosion resistance. In contrast, a content of Co exceeding 2.00% results in lower processability. Therefore, from the viewpoint of corrosion resistance, the content of Co is preferably 0.06 to 2.00%, and more preferably 0.30 to 1.20%.

### <Au: 0.00 to 2.00%>

Au is an element that particularly improves heat resistance. From the viewpoint of ensuring achievement of such an effect, it is preferable that the content of Au is set to 0.06% or more. However, a content of Au exceeding 2.00% results in lower processability. Therefore, the content of Au is preferably 0.00 to 2.00%, more preferably 0.06% to 2.00%, and most preferably 0.30 to 1.20%. Incidentally, the content of Au may be 0.00%.

### <Mn: 0.00 to 2.00%>

Mn is an element that particularly improves heat resistance. From the viewpoint of ensuring achievement of such an effect, it is preferable that the content of Mn is set to 0.06% or more. However, a content of Mn exceeding 2.00% results in lower processability. Therefore, the content of Mn is preferably 0.00 to 2.00%, more preferably 0.06% to 2.00%, and most preferably 0.30 to 1.20%. Incidentally, the content of Mn may be 0.00%. In consideration of corrosion resistance when used in a corrosive environment, the aluminum alloy material preferably contains Mn. Further, a content of Mn of less than 0.06% results in insufficient corrosion resistance. In contrast, a content of Mn exceeding 2.00% results in lower processability. Therefore, from the viewpoint of corrosion resistance, the content of Mn is preferably 0.06 to 2.00%, and more preferably 0.30 to 1.20%.

### <Cr: 0.00 to 2.00%>

Cr is an element that particularly improves heat resistance. From the viewpoint of ensuring achievement of such an effect, it is preferable that the content of Cr is set to 0.06% or more. However, a content of Cr exceeding 2.00% results in lower processability. Therefore, the content of Cr is preferably 0.00 to 2.00%, more preferably 0.06% to 2.00%, and most preferably 0.30 to 1.20%. Incidentally, the content of Cr may be 0.00%. In consideration of corrosion resistance when used in a corrosive environment, the aluminum alloy material preferably contains Cr. Further, a content of Cr of less than 0.06% results in insufficient corrosion resistance. In contrast, a content of Cr exceeding 2.00% results in lower processability. Therefore, from the viewpoint of corrosion resistance, the content of Cr is preferably 0.06 to 2.00%, and more preferably 0.30 to 1.20%.

### <V: 0.00 to 2.00%>

V is an element that particularly improves heat resistance. From the viewpoint of ensuring achievement of such an effect, it is preferable that the content of V is set to 0.06% or more. However, a content of V exceeding 2.00% results in lower processability. Therefore, the content of V is preferably 0.00 to 2.00%, more preferably 0.06% to 2.00%, and most preferably 0.30 to 1.20%. Incidentally, the content of V may be 0.00%. In consideration of corrosion resistance when used in a corrosive environment, the aluminum alloy material preferably contains V. Further, a content of V of less than 0.06% results in insufficient corrosion resistance. In contrast, a content of V exceeding 2.00% results in lower processability. Therefore, from the viewpoint of corrosion resistance, the content of V is preferably 0.06 to 2.00%, and more preferably 0.30 to 1.20%.

### <Zr: 0.00 to 2.00%>

Zr is an element that particularly improves heat resistance. From the viewpoint of ensuring achievement of such an effect, it is preferable that the content of Zr is set to 0.06% or more. However, a content of Zr exceeding 2.00% results in lower processability. Therefore, the content of Zr is preferably 0.00 to 2.00%, more preferably 0.06% to 2.00%, and most preferably 0.30 to 1.20%. Incidentally, the content of Zr may be 0.00%. In consideration of corrosion resistance when used in a corrosive environment, the aluminum alloy material preferably contains Zr. Further, a content of Zr of less than 0.06% results in insufficient corrosion resistance. In contrast, a content of Zr exceeding 2.00% results in lower processability. Therefore, from the viewpoint of corrosion resistance, the content of Zr is preferably 0.06 to 2.00%, and more preferably 0.30 to 1.20%.

### <Sn: 0.00 to 2.00%>

Sn is an element that particularly improves heat resistance. From the viewpoint of ensuring achievement of such an effect, it is preferable that the content of Sn is 0.06% or more. However, a content of Sn exceeding 2.00% results in lower processability. Therefore, the content of Sn is preferably 0.00 to 2.00%, more preferably 0.06% to 2.00%, and most preferably 0.30 to 1.20%. Incidentally, the content of Sn may be set to 0.00%. In consideration of corrosion resistance when used in a corrosive environment, the aluminum alloy material preferably contains Sn. Further, a content of Sn of less than 0.06% results in insufficient corrosion resistance. In contrast, a content of Sn exceeding 2.00% results in lower processability. Therefore, from the viewpoint of corrosion resistance, the content of Sn is preferably 0.06 to 2.00%, and more preferably 0.30 to 1.20%.

### <Balance: Al and inevitable impurities>

The balance other than the above-mentioned components comprises Al and inevitable impurities. The inevitable impurities refer to impurities at a content level that can be inevitably included in the production process. Since the inevitable impurities may be a factor that lowers processability depending on the content, it is preferable to suppress the content of the inevitable impurities to some extent in consideration of lowered processability. Examples of the components that can be exemplified as the inevitable impurities include elements such as boron (B), bismuth (Bi), lead (Pb), gallium (Ga) and strontium (Sr), etc. Incidentally, the upper limit of the content of the inevitable impurities may be 0.05% or less for each of the above-mentioned components and 0.15% or less in total of the above-mentioned components.

Such an aluminum alloy material can be realized by combining and controlling the alloy composition and the production process.

### (3) Characteristics of aluminum alloy material

Subsequently, characteristics of an aluminum alloy material of an embodiment are described.

### [Bending fatigue resistance]

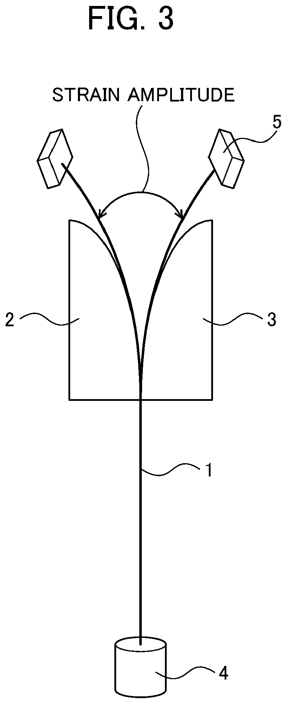

As a reference for the bending fatigue resistance, a strain amplitude at room temperature was set to ±0.17% and ±0.25%. Bending fatigue resistance varies with strain amplitudes. A large strain amplitude shortens fatigue life, and a small strain amplitude lengthens fatigue life. The strain amplitude can be determined using an apparatus shown in Fig. 3, which is described below.

### [Elongation]

Elongation is measured according to JIS Z2241:2011. Detailed measuring conditions are explained in the Example section to be described below.

The aluminum alloy material preferably has an elongation of 3.0% or more, particularly when it is a wire rod. The elongation of the aluminum alloy material is more preferably 3.5% or more, still more preferably 4.0% or more, still more preferably 5.0% or more, and most preferably 6.0% or more. Since the aluminum alloy material having such a predetermined elongation is less likely to be disconnected during processing, during cable production or during use, high reliability can be obtained. The upper limit of the elongation of the aluminum alloy material is not particularly limited, and is, for example, 20.0%.

### (4) Use of aluminum alloy material

Use of an aluminum alloy material of an embodiment includes all the applications in which a copper-based material and an aluminum-based material are used, particularly applications including repeated motion. Specifically, the aluminum alloy material can be suitably used as a conductive member such as an electric wire or a cable, a member for batteries such as a mesh or net for current collectors, a spring member for an electric contact such as a connector or a terminal, a bonding wire for a semiconductor, a winding used for a generator or a motor, or the like.

More specific application examples of the conductive member include a power electric wire such as a cab tire cable, an overhead power line, OPGW, a subterranean electric wire and a submarine cable, a communication electric wire such as a telephone cable and a coaxial cable, a vehicle wire such as a robot cable, a wired drone cable, an EV/HEV charge cable, a twisted cable for wind power generation on the ocean, an elevator cable, an umbilical cable, a train overhead wire and a jumper wire, an appliance wire such as a trolley wire, a transportation electric wire such as an automobile wire harness, a vessel electric wire and an airplane electric wire, a bus bar, a lead frame, a flexible flat cable, a lightning rod, an antenna, a connector, a terminal, a cable braid, and the like.

Examples of more specific applications of the spring member include a spring electrode, a terminal, a connector, a spring for a semiconductor probe, and the like.

In addition to the above, the aluminum alloy material is also suitable as a metal fiber to be added in order to impart conductivity to a resin-based material, a plastic material, cloth, or the like, or to control strength or elastic modulus.

### (5) Method for producing aluminum alloy material

In the aluminum alloy material, for example, Al-Mg-Si-based alloy wire rod, small crystal grains are accumulated in the vicinity of the surface layer where bending strain is large, and relatively large crystal grains exist in the thickness central position C where the bending strain is small, and thereby both high bending fatigue resistance and elongation are achieved. Therefore, the method of the present application significantly differs in terms of approach, from conventional methods of producing aluminum alloy materials, such as a method of precipitation hardening of an Mg-Si compound or a method of rendering crystals finer.

In a preferable producing method of an aluminum alloy material according to an embodiment, the aluminum alloy material having a predetermined alloy composition is subjected to cold working [1] at a working ratio of 5 or more as the final working. If required, before cold working [1], a pretreatment step [2] may be performed for making a crystal grain size of the surface layer finer, and after cold working [1], temper annealing [3] may be performed. Detailed explanation is given below.

Normally, if repeated stress is applied to a metal material, crystal slip occurs together with elastic deformation as an elementary step of deformation of the metal crystals. The more likely the occurrence of crystal slip in a metal material, the more easily crack generating points are formed on the surface thereof. Thus, such a metal material can be said to have lower bending fatigue resistance. Therefore, in order to increase bending fatigue resistance of a metal material, it is important to suppress crystal slip occurring in the metal structure. As a factor for preventing such a crystal slip, presence of crystal grain boundaries in the metal structure can be exemplified. Such crystal grain boundaries can prevent crystal slip from propagating through the metal structure when stress is applied to the metal material, thereby enhancing fatigue characteristics of the metal material.

Therefore, in order to increase a fatigue life of a metal material, introduction of crystal grain boundaries into the metal structure at a high density, that is, accumulation of small crystal grains, is considered desirable. Here, a possible mechanism for forming crystal grain boundaries includes division of metal crystals accompanied by deformation of metal structure, as described below.

Inside a polycrystalline material, a stress state is usually in a complicated multiaxial state due to the difference in orientations between adjacent crystal grains and spatial distribution of distortion between a region near the surface layer in contact with a working tool and the internal bulk. Due to these influences, crystal grains having a single orientation prior to deformation undergo division into a plurality of orientations due to the deformation, and misorientation boundaries are formed between divided crystals.

However, the misorientation boundaries formed are in a structure different from normal 12-coordinated close-packed atomic arrangement and have interfacial energy. Therefore, in a typical metal structure, when the density of crystal grain boundaries becomes equal to or higher than a predetermined density, increased internal energy is considered to serve as a driving force to cause dynamic or static recovery or recrystallization to occur. Therefore, even when a deformation amount is increased, the grain boundary density is typically considered to become saturated because increase and decrease in the crystal grain boundaries concurrently occurs.

Such a phenomenon is consistent with the relationship between the working ratio and the tensile strength in pure aluminum or pure copper, which has a conventional metal structure. Pure aluminum or pure copper, which has a typical metal structure, shows improvement in the tensile strength (hardening) at a relatively low working ratio, but the amount of hardening tends to plateau as the working ratio increases. Here, the working ratio is considered to correspond to the amount of the above-mentioned deformation applied to the metal structure, and the plateauing of the amount of hardening is considered to correspond to the saturation of the density of grain boundaries.

In addition, if working is merely performed, the bending fatigue resistance increases, whereas ductility decreases, and this results in a problem that the wire is easily disconnected during working or use. This is considered to take place, because a large amount of dislocation is introduced into crystals, so that dislocation density is saturated and no further plastic deformation can be possible.

Contrary to this, in an aluminum alloy material of an embodiment, it has been found that as the working ratio increases, crystal grain boundary density in the surface layer increases, that is, accumulation of small crystal grains continues, and the bending fatigue resistance continues to improve. The reason for this is considered to be in that the above-mentioned alloy composition of an aluminum alloy material promotes an increase in the density of crystal grain boundaries and can suppress an increase in the inner energy even when the density of crystal grain boundaries exceeds a certain level in the metal structure. As a result, the above-mentioned alloy composition is considered to be able to prevent recovery or recrystallization in the metal structure and effectively increase crystal grain boundaries in the metal structure.

Although the mechanism of reduction of crystal size as above accomplished by combined addition of Mg and Si is not necessarily clear, the mechanism is considered to be due to the following phenomena: (i) Mg having strong interaction with a lattice defect such as a dislocation promotes reduction of crystal size and thereby accelerates crystal division, and (ii) Mg atoms which have an atomic radius larger than Al atoms and Si atoms which have a smaller atomic radius than Al atoms mitigate mismatch in the atomic arrangement at grain boundaries, resulting in effective suppression of an increase in the internal energy due to processing.

In an aluminum-alloy material of an embodiment, plastic strain is introduced, in particular, into the surface thereof, so that the aluminum alloy material includes very fine crystals in the vicinity of the surface layer, whereas crystals in the thickness central position C remain relatively large. Such a crystal structure enables fine crystals in the surface layer to effectively work during bending deformation, and large crystals in the thickness central position C to effectively work as to elongation.

In the producing method of an aluminum alloy material of an embodiment, a working ratio in cold working [1] is set to 5 or more. In particular, processing at a large working ratio promotes metal crystal division accompanied by deformation of the metal structure, and allows crystal grain boundaries to be introduced into the inside of the aluminum alloy material at high density. As a result, small crystal grains accumulate in the surface layer of the aluminum alloy material, and this enables bending fatigue resistance of the aluminum alloy material to be greatly improved. Such a working ratio is set preferably to 6 or more, and more preferably to 7 or more. The upper limit of the working ratio is not particularly provided, and is typically 15 or less.

Note that the working ratio η is represented by the following formula (1) in which s1 represents a cross-sectional area before working and s2 represents a cross-sectional area after working (s1>s2).

### Working ratio (dimensionless): η = ln(s1/s2) ... (1)

The method of cold working [1] may be appropriately selected according to the form (wire rod, plate, strip, foil, etc.) of target aluminum alloy materials, and examples thereof include a cassette roller die, groove roll rolling, round wire rolling, drawing using a die, etc. swaging, and the like. In addition, various conditions in the above-described working, such as the type of lubricating oil, working speed, heat generation in processing, etc., may be appropriately adjusted within known ranges.

In addition, cold working [1] may be preceded by a pretreatment step [2]. The pretreatment step [2] includes shot peening, extrusion, swaging, skin pass, rolling, recrystallization, and the like. This makes it possible to provide a gradient in crystal grain sizes between the surface layer and the inside in the aluminum alloy material in a stage prior to the cold working [1], to make the crystalline structure after cold working [1] finer and to increase the gradient in the crystal grain sizes. Various conditions in the above steps, such as the working speed, heat generation in working, and temperatures, etc., may be adjusted in known ranges as appropriate.

As for the aluminum alloy material, any aluminum alloy material that has the above-mentioned alloy composition may be used. For example, an extruded material, an ingot material, a hot rolled material, a cold rolled material, or the like may be appropriately selected and used according to the purpose of the use.

In order to relieve residual stress and improve elongation, temper annealing [3] may be performed after cold working [1]. The treatment temperature in the temper annealing [3] is set to 50 to 200°C. Treatment temperatures of the temper annealing [3] less than 50°C make the above-mentioned effects difficult to be achieved, and treatment temperatures exceeding 200°C induce crystal grains growth via recovery or recrystallization, which results in reduction in bending fatigue resistance. The retention time of the temper annealing [3] is preferably 1 to 48 hours. Note that various conditions of such heat treatment may be appropriately adjusted according to the type and amount of inevitable impurities, the state of solid solution and precipitation of aluminum alloy materials.

As described above, the aluminum alloy material is processed to have a high working ratio by a method such as drawing using a die or rolling. As a result, a long aluminum alloy material can be obtained. On the other hand, it is difficult to obtain such a long aluminum alloy material by conventional methods for producing aluminum alloy materials such as powder sintering, compression-twisting, high pressure torsion (HPT), forging, Equal Channel Angular Pressing (ECAP), and the like. An aluminum alloy material of an embodiment is preferably produced to have a length of 10 m or more. The upper limit of the length of the aluminum alloy material during production is not particularly provided, but is preferably 50,000 m in consideration of workability and the like.

Further, in an aluminum-alloy material of an embodiment, it is effective to increase the working ratio in order to render crystal grains of the surface layer of the aluminum alloy material finer. Therefore, when a wire rod is produced, the smaller the diameter is, and when a plate or foil is produced, the thinner the thickness is, the easier is it to realize the configuration of the aluminum alloy material of the embodiment.

In particular, in the case of aluminum alloy material being a wire rod, the wire diameter thereof is preferably 1.50 mm or less, more preferably 0.75 mm or less, more preferably 0.30 mm or less, and most preferably 0.10 mm or less. The lower limit of the wire diameter is not particularly provided, but is preferably 0.01 mm in consideration of workability and the like.

When the aluminum alloy material is a plate, the plate thickness is preferably 2.00 mm or less, more preferably 1.50 mm or less, more preferably 1.00 mm or less, and particularly preferably 0.50 mm or less. The lower limit of the plate thickness is not particularly provided, but is preferably 0.02 mm in consideration of workability and the like.

As described above, the aluminum alloy material may be processed to have a small diameter or a thin thickness, but a plurality of such pieces of aluminum alloy material are prepared and bonded together to increase the diameter or thickness so as to be used for a target application. As a method for bonding, known methods may be used, and examples thereof include pressure welding, welding, bonding by adhesive, friction stir welding, or the like. When the aluminum alloy material is a wire rod, a plurality of rods may be bundled and twisted together and used for an intended application as a twisted aluminum alloy wire. Incidentally, the temper annealing [3] may be performed after subjecting an aluminum alloy material to the cold working [1], followed by bonding or twisting.

According to the above-described embodiments, it is possible to produce an aluminum alloy material having a predetermined alloy composition and having a metal structure in which crystal grains with an elongated shape are aligned and extend in one direction, by the above-described production method. This aluminum alloy material has an average crystal grain size R1 of 400 nm or less in the thickness position D and a ratio R2/R1 of 1.8 or more. Thereby, the aluminum alloy material has bending fatigue resistance significantly superior to that of conventional aluminum alloy materials and is excellent in elongation while having a bending fatigue resistance comparable to that of a copper-based metal material. A wire rod of such an aluminum alloy material can be an alternative for copper-based conductive members.

Although the embodiments have been described above, the present invention is not limited to the above-mentioned embodiments, and includes all embodiments included in the scope of the appended claims.

### EXAMPLES

Subsequently, the Examples and the Comparative Examples are described below, but the present invention is not limited to these Examples.

### (Examples 1 to 4)

In Examples 1 to 4, 10 mm diameter rods having the alloy compositions shown in Table 1 were used. The rods were subjected to shot peening using a steel ball with a diameter of 1 mm as a pretreatment step [2], and then aluminum alloy wire rods having a wire diameter of 0.5 to 0.05 mm were produced under the production conditions A to D shown in Table 1, respectively.

### (Examples 5 to 8)

In Examples 5 to 8, 60 mm diameter rods having the alloy compositions shown in Table 1 were used. The rods were subjected to swaging as the pretreatment step [2] to have a diameter of 10 mm and then aluminum alloy wire rods having a wire diameter of 0.5 to 0.05 mm were produced under the production conditions A to D shown in Table 1, respectively.

### (Examples 9 to 15)

In Examples 9 to 15, 10 mm diameter rods having the alloy compositions shown in Table 1 were used. The rods were subjected to skin pass processing at single-pass reduction in area < 5%, using a drawing die as the pretreatment step [2], and aluminum alloy wire rods having a wire diameter of 0.5 to 0.05 mm were produced under the production conditions A to D, C, D and C shown in Table 1, respectively.

### (Examples 16 to 18)

In Examples 16 to 18, 60 mm diameter rods having the alloy compositions shown in Table 1 were used. The rods were subjected to swaging processing as the pretreatment step [2] to thin the rods to a diameter of 30 mm and aluminum alloy wire rods having a wire diameter of 1.5 to 0.2 mm were produced under the production conditions A, A and D shown in Table 1, respectively.

### (Comparative Examples 1 to 4)

In Comparative Examples 1 to 4, 10 mm diameter rods having the alloy compositions shown in Table 1 were used. Aluminum alloy wire rods having a wire diameter of 0.15 mm or 3.7 mm were produced under the production conditions C, C, F and C shown in Table 1, respectively.

### (Comparative Example 5)

Using a rod having the alloy composition shown in Table 1, an aluminum alloy wire rod having a wire diameter of 0.08 mm was produced under the production condition E shown in Table 1.

Note that the production conditions A to F shown in Table 1 were specifically as described below.

### <Production Condition A>

A rod prepared was subjected to cold working [1] at a working ratio of 6.0. Note that the temper annealing [3] was not performed.

### <Production Condition B>

The same conditions as the production condition A were used except that the working ratio of cold working [1] was set to 8.5.

### <Production Condition C>

The same conditions as the production condition A were used except that the working ratio of cold working [1] was set to 11.0.

### <Production Condition D>

A rod prepared was subjected to cold working [1] at a working ratio of 8.5, and then subjected to temper annealing [3] at a treatment temperature of 100°C for a holding time of 5 hours.

### <Production Condition F>

The same conditions as the production condition A were used except that the working ratio of cold working [1] was set to 2.0.

### (Comparative Example 5)

### <Production Condition E>

Aluminum having a purity of 99.95%, magnesium having a purity of 99.95%, silicon having a purity of 99.99%, and iron having a purity of 99.95% were introduced into a graphite crucible in the respective predetermined amounts, and stirred and melted at 720°C by high-frequency induction heating to produce a molten metal having an alloy composition of 0.60% by mass of Al, 0.30% by mass of Mg, 0.05% by mass of Si and Fe. Subsequently, this molten metal was transferred to a container provided with a graphite die, and a wire having a diameter of 10 mm ϕ and a length of 100 mm was continuously cast through a water-cooled graphite die at a casting speed of about 300 mm/min. A cumulative equivalent strain of 4.0 was then introduced by the ECAP method. The recrystallization temperature at this stage was measured to be 300°C. Then, preheating was performed in an inert gas atmosphere at 250°C for 2 hours. Subsequently, a first wire drawing treatment of a working ratio of 0.34 was performed. The recrystallization temperature at this stage was measured to be 300°C. Then, primary heat treatment was performed at 260°C for 2 hours in an inert gas atmosphere. Thereafter, the wire was passed through a water-cooled wire drawing die at a drawing rate of 500 mm/min., so that the second wire drawing treatment of a working ratio of 9.3 was performed. The recrystallization temperature at this stage was measured to be 280°C. Then, secondary heat treatment was performed at 220°C for 1 hour in an inert gas atmosphere to obtain an aluminum alloy wire rod having a wire diameter of 0.08 mm.

### [Evaluation]

The aluminum alloy wire rods obtained in the Examples and the Comparative Examples were evaluated for the characteristics described below. The evaluation conditions of the respective characteristics were as follows. Results are shown in Table 1.

### [1] Alloy Composition

According to JIS H1305: 2005, alloy compositions were analyzed by emission spectrometry. Measurements were performed using an emission spectrometer (manufactured by Hitachi High-Technologies Science, Corporation).

### [2] Structure Observation

Metal structure observation was performed using an SIM, scanning ion microscope, (SMI3050TB, manufactured by Seiko Instruments Co., Ltd.). The observation was performed at an acceleration voltage of 30 kV.

As for an observation sample, an aluminum alloy wire rod was cut parallel and perpendicular to the longitudinal direction (working direction) in a thickness of 100 nm ± 20 nm using FIB (Focused Ion Beam), followed by finishing with ion milling and the resulting samples were used.

In the SIM observation, gray contrast was used: a difference in contrast was regarded as a difference in the orientation of the crystals, and a boundary on which the contrast differed discontinuously was recognized as a crystal grain boundary. Even when crystal orientations were different, no difference was sometimes observed in the gray contrast depending on diffraction conditions of the electron beam. In such a case, an angle between the electron beam and the sample was changed by tilting two orthogonal sample rotation axes in a sample stage of the electron microscope by ±3°, and the observation surface was photographed under a plurality of diffraction conditions to recognize grain boundaries. A viewing field was set to (15 to 40) um × (15 to 40) µm, and observation was performed in the central part and a thickness position in a region extending from the surface of the wire rod to 1/20 of the wire diameter, in the cross sections each parallel to and perpendicular to the above-mentioned working direction. Observation magnification was appropriately adjusted according to the size of crystal grains.

Then, the presence or absence of a fibrous metal structure was judged in a cross section parallel to the longitudinal direction, i.e., the working direction, of the aluminum alloy wire rod, from the images photographed when the SIM observation was performed. When a fibrous metal structure was observed, the fibrous metal structure was evaluated as being "present".

In addition, in each of the observation fields, any 100 crystal grains were selected from the crystal grains and an average crystal grain size R1, an average crystal grain size R2, a longitudinal direction dimension L1 and a short direction dimension L2 were measured. Then, averages of the 100 crystal grains were calculated with respect to the obtained measurement values, and an average crystal grain size R1, a ratio (R2/R1), and an aspect ratio (L1/L2) were determined. In some of the Comparative Examples in which an average crystal grain size R1 was obviously larger than 400 nm, crystal grains with a grain size larger than 400 nm were not selected to reduce the number of crystal grains to be selected from 100, and the respective averages were calculated. Further, for those apparently having an aspect ratio (L1/L2) of 10 or more, the aspect ratio (L1/L2) was uniformly represented as 10 or more (in Table 1, represented as "≥ 10").

### [3] Bending Fatigue Resistance

The number of repetitions until breakage was measured by repeatedly bending, using a reversed bending fatigue tester manufactured by Fujii Seiki Co., Ltd. (currently renamed Fujii Co., Ltd.), and using a jig that can impart bending strain of strain amplitude of ±0.17% and ±0.25%. In this test, four wire rods were prepared for each of the Examples, the four wire rods were measured one by one, and the average value thereof (N=4) was obtained. As shown in Fig. 3, an aluminum alloy wire rod 1 was inserted between the bending jigs 2 and 3 that were spaced by 1 mm, and repeatedly moved along the bending jigs 2 and 3. Wires with peculiar winding were straightened by applying tensile strain so that repeated bending strains were applied at a certain location during the test. One end of an aluminum alloy wire rod 1 was fixed to a holding jig 5 so that repeated bending could be carried out, and a weight 4 was hung from the other end so as to have a loading stress of 1 to 5% of 0.2% proof strength of the aluminum alloy wire rod 1. The holding jig 5 moves during the test, the aluminum alloy wire rod 1 fixed thereto also moves, so that repeated bending can be performed. Repetitions were performed under the condition of 100 repetitions per minute. The tester has a mechanism in which breakage of the aluminum alloy wire rod 1 causes the weight 4 to drop, and counting to stop. Additionally, pieces of PTFE tape were attached to the bending jigs 2 and 3 in order to prevent wear in the bending jigs 2 and 3, because the aluminum alloy wire rod 1 has a higher strength than conventional aluminum alloy wire rods, and the weight of the weight 4 tends to be heavier than the weight in normal repeated bending tests.

The number of repetitions until breakage was evaluated good for more than one million times (10⁶) at the strain amplitude of ±0.17%, and for more than 100,000 times (10⁵) at the strain amplitude of ± 0.25%.

### [4] Elongation

A tensile test was conducted using a precision universal testing machine (manufactured by Shimadzu Corporation) in accordance with JIS Z2241: 2001, to measure elongation. This test was carried out by setting a distance between points to be rated to 10 cm and a deformation speed to 10 mm/min. For each of the Examples, three wire rods were prepared, each of the three wire rods was measured, and the resulting average value (N=3) was used as the elongation of the wire rod. The larger the elongation, the more preferable the wire rod, and 3.0% or more was evaluated as achieving an acceptable level.

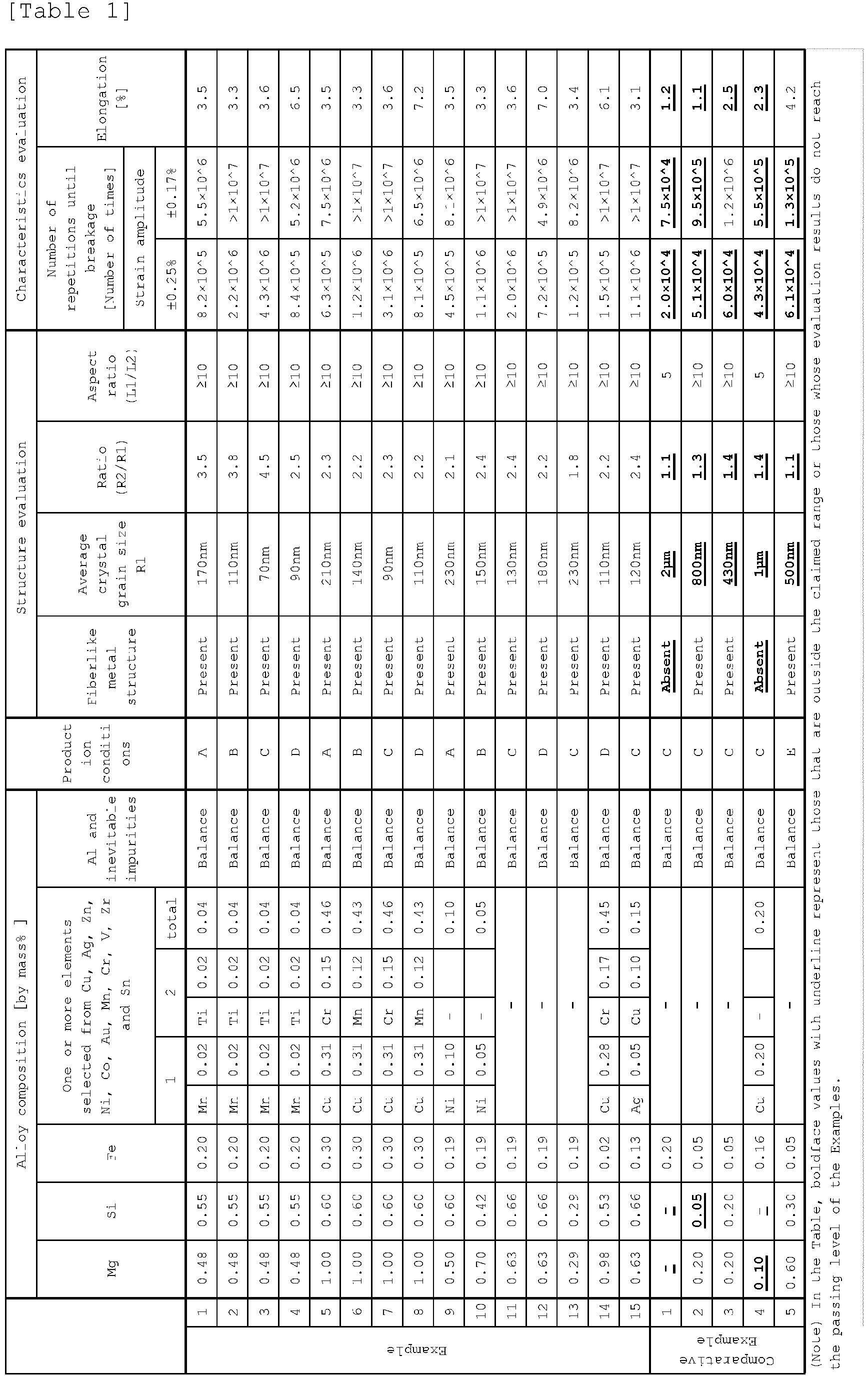

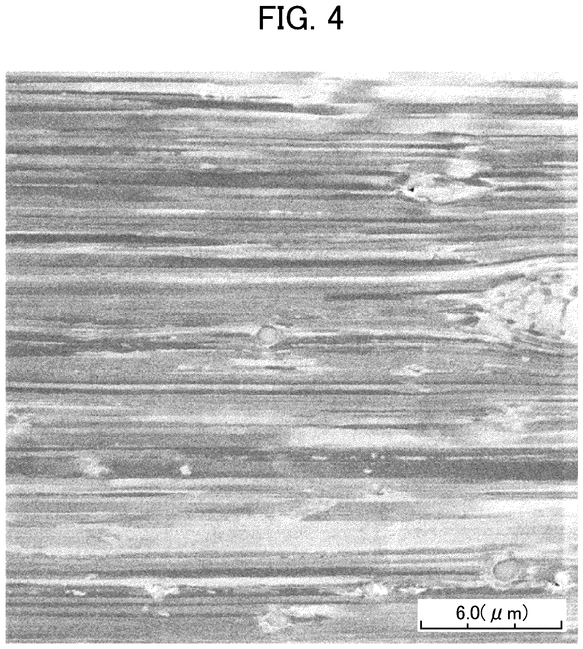

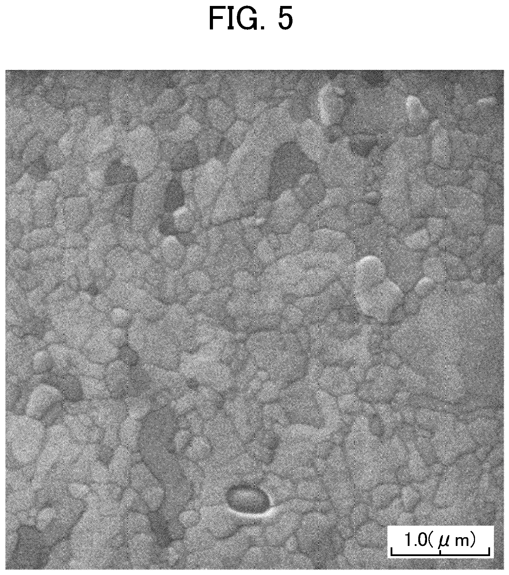

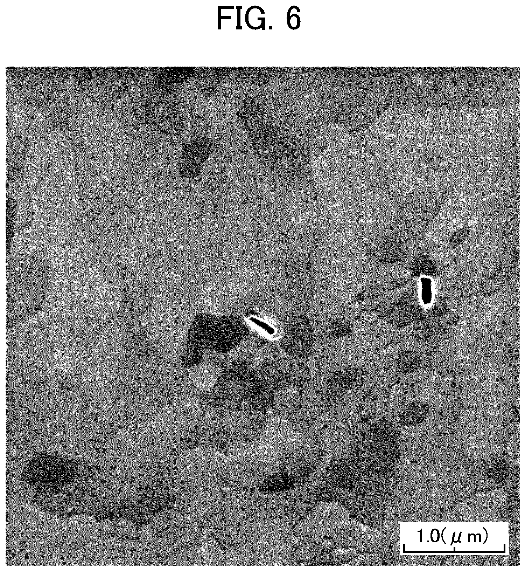

Figs. 4 to 6 are SIM images of the metal structure of the aluminum alloy wire rod of Example 1. Fig. 4 is a SIM image of a cross section parallel to the longitudinal direction of the aluminum alloy wire rod. Fig. 5 is a SIM image of a part in a thickness position extending from a surface of an aluminum alloy wire rod to 1/20 of the wire diameter in a cross section perpendicular to the longitudinal direction of the aluminum alloy wire rod. Fig. 6 is a SIM image of the central part of a cross section perpendicular to the longitudinal direction of the aluminum alloy wire rod.

As shown in Fig. 4, a fibrous metal structure was observed in the aluminum alloy wire rod. In addition, an average crystal grain size R1 was 400 nm or less in a thickness position extending inwardly from the surface of the wire rod to 1/20 of the wire diameter, as shown in Fig. 5, and in the central retion, a relatively large crystal grain diameter was maintained, as shown in Fig. 6.

### EXPLANATION OF REFERENCE NUMERALS

1 Aluminum alloy wire rod
2, 3 Bending jig
4 Weight
5 Holding jig

## Claims

1. An aluminum alloy material having an alloy composition comprising, by mass%, Mg in an amount of 0.20 to 1.80%, Si in an amount of 0.20 to 2.00% and Fe in an amount of 0.01 to 1.50%, further one or more element selected from the group of Cu, Ag, Zn, Ni, Ti, Co, Au, Mn, Cr, V, Zr and Sn in an amount of 0.00 to 2.00% in total, with the balance being Al and inevitable impurities,
wherein the aluminum alloy material has a fibrous metal structure in which crystal grains extend along one direction,
wherein, in a cross section of the aluminum alloy material perpendicular to a longitudinal direction along which the crystal grains extend, an average crystal grain size R1 of crystal grains existing in a thickness position D is 400 nm or less, with the thickness position D being a position in a region extending from a surface of the aluminum alloy material to 1/20 of a thickness of the aluminum alloy material and
wherein a ratio (R2/R1) of an average crystal grain size R2 of crystal grains existing in a thickness central position C of the aluminum alloy material with respect to the average crystal grain size R1 in the thickness position D is equal to or greater than 1.8.

2. The aluminum alloy material according to claim 1,
wherein, in a cross section of the aluminum alloy material parallel to the longitudinal direction along which crystal grains extend, the crystal grains existing in the thickness position D have a ratio (L1/L2) of a longitudinal direction dimension L1 measured in the longitudinal direction with respect to a short direction dimension L2 measured in a perpendicular direction relative to the longitudinal direction, equal to or greater than 10.

3. The aluminum alloy material according to claim 1 or 2,
wherein the aluminum alloy material is a wire rod.

4. The aluminum alloy material according to claim 3,
wherein a diameter of the wire rod is 0.01 to 1.50 mm.

5. The aluminum alloy material according to claim 1 or 2,
wherein the aluminum alloy material is a plate.

6. The aluminum alloy material according to claim 5,
wherein a thickness of the plate is 0.02 to 2.00 mm.

7. A cable, comprising the aluminum alloy material according to any one of claims 3 to 6.

8. An electric wire comprising the aluminum alloy material according to any one of claims 3 to 6.

9. A spring member comprising the aluminum alloy material according to any one of claims 3 to 6.

## Patentansprüche

1. Aluminiumlegierungsmaterial mit einer Legierungszusammensetzung, umfassend in Masse-%, Mg in einer Menge von 0.20 bis 1.80 %, Si in einer Menge von 0.20 bis 2.00 % und Fe in einer Menge von 0.01 bis 1.50 %, ferner ein oder mehrere Elemente, die aus der Gruppe Cu, Ag, Zn, Ni, Ti, Co, Au, Mn, Cr, V, Zr und Sn ausgewählt sind, in einer Menge von insgesamt 0.00 bis 2.00 %, wobei der Rest Al und unvermeidliche Verunreinigungen sind,
wobei das Aluminiumlegierungsmaterial eine faserförmige Metallstruktur aufweist, in der sich Kristallkörner entlang einer Richtung erstrecken,
wobei in einem Querschnitt des Aluminiumlegierungsmaterials senkrecht zu einer Längsrichtung, entlang der sich die Kristallkörner erstrecken, eine durchschnittliche Kristallkorngröße R1 von Kristallkörnern, die in einer Dickenposition D vorhanden sind, 400 nm oder weniger beträgt, wobei die Dickenposition D eine Position in einem Bereich ist, die sich von einer Oberfläche des Aluminiumlegierungsmaterials zu 1/20 einer Dicke des Aluminiumlegierungsmaterials erstreckt, und
wobei ein Verhältnis (R2/R1) einer durchschnittlichen Kristallkorngröße R2 von Kristallkörnern, die in einer zentralen Dickenposition C des Aluminiumlegierungsmaterials vorhanden sind, zu der durchschnittlichen Kristallkorngröße R1 in der Dickenposition D gleich oder größer als 1.8 ist.

2. Aluminiumlegierungsmaterial nach Anspruch 1,
wobei in einem Querschnitt des Aluminiumlegierungsmaterials parallel zur Längsrichtung, entlang der sich Kristallkörner erstrecken, die in der Dickenposition D vorhandenen Kristallkörner ein Verhältnis (L1/L2) einer in der Längsrichtung gemessenen Längsrichtungsabmessung L1 zu einer in einer Richtung senkrecht zur Längsrichtung gemessenen Kurzrichtungsabmessung L2 aufweisen, das gleich oder größer als 10 ist.

3. Aluminiumlegierungsmaterial nach Anspruch 1 oder 2,
wobei das Aluminiumlegierungsmaterial ein Walzdraht ist.

4. Aluminiumlegierungsmaterial nach Anspruch 3,
wobei ein Durchmesser des Walzdrahtes 0.01 bis 1.50 mm beträgt.

5. Aluminiumlegierungsmaterial nach Anspruch 1 oder 2,
wobei das Aluminiumlegierungsmaterial eine Platte ist.

6. Aluminiumlegierungsmaterial nach Anspruch 5,
wobei die Dicke der Platte 0.02 bis 2.00 mm beträgt.

7. Kabel, umfassend das Aluminiumlegierungsmaterial gemäß einem der Ansprüche 3 bis 6.

8. Elektrische Leitung, welche das Aluminiumlegierungsmaterial gemäß einem der Ansprüche 3 bis 6 umfasst.

9. Federelement, welches das Aluminiumlegierungsmaterial gemäß einem der Ansprüche 3 bis 6 umfasst.

## Revendications

1. Matériau d'alliage d'aluminium présentant une composition d'alliage comprenant, en % en masse, du Mg en une quantité de 0,20 à 1,80 %, du Si en une quantité de 0,20 à 2,00 % et du Fe en une quantité de 0,01 à 1,50 %, un ou plusieurs autres éléments sélectionnés dans le groupe comprenant Cu, Ag, Zn, Ni, Ti, Co, Au, Mn, Cr, V, Zr et Sn en une quantité de 0,00 à 2,00 % au total, le reste étant Al et des impuretés inévitables,
dans lequel le matériau d'alliage d'aluminium présente une structure métallique fibreuse dans laquelle des grains cristallins s'étendent le long d'une direction,
dans lequel, dans une section transversale du matériau d'alliage d'aluminium perpendiculaire à une direction longitudinale le long de laquelle les grains cristallins s'étendent, une taille moyenne de grain cristallin R1 de grains cristallins existant dans une position d'épaisseur D est de 400 nm ou moins, la position d'épaisseur D étant une position dans une région s'étendant d'une surface du matériau d'alliage d'aluminium à 1/20 d'une épaisseur du matériau d'alliage d'aluminium et
dans lequel un rapport (R2/R1) d'une taille moyenne de grain cristallin R2 de grains cristallins existant dans une position centrale d'épaisseur C du matériau d'alliage d'aluminium par rapport à la taille moyenne de grain cristallin R1 dans la position d'épaisseur D est supérieur ou égal à 1,8.

2. Matériau d'alliage d'aluminium selon la revendication 1,
dans lequel, dans une section transversale du matériau d'alliage d'aluminium parallèle à la direction longitudinale le long de laquelle des grains cristallins s'étendent, les grains cristallins existant dans la position d'épaisseur D présentent un rapport (L1/L2) d'une dimension de direction longitudinale L1 mesurée dans la direction longitudinale par rapport à une dimension de direction courte L2 mesurée dans une direction perpendiculaire à la direction longitudinale, supérieur ou égal à 10.

3. Matériau d'alliage d'aluminium selon la revendication 1 ou 2,
dans lequel le matériau d'alliage d'aluminium est un fil machine.

4. Matériau d'alliage d'aluminium selon la revendication 3,
dans lequel un diamètre du fil machine est de 0,01 à 1,50 mm.

5. Matériau d'alliage d'aluminium selon la revendication 1 ou 2,
dans lequel le matériau d'alliage d'aluminium est une plaque.

6. Matériau d'alliage d'aluminium selon la revendication 5,
dans lequel une épaisseur de la plaque est de 0,02 à 2,00 mm.

7. Câble comprenant le matériau d'alliage d'aluminium selon l'une quelconque des revendications 3 à 6.

8. Fil électrique comprenant le matériau d'alliage d'aluminium selon l'une quelconque des revendications 3 à 6.

9. Élément de ressort comprenant le matériau d'alliage d'aluminium selon l'une quelconque des revendications 3 à 6.
